# EUROPÄISCHE PATENTSCHRIFT

(11) **EP 1 574 485 B1**
(45) Veröffentlichungstag und Bekanntmachung des Hinweises auf die Patenterteilung: **27.03.2013**
(21) Anmeldenummer: 05001068.5
(22) Anmeldetag: 20.01.2005
(51) Int. Cl.: C03B 33/09, C03B 33/04, B23K 26/40

(54) **Verfahren zum Freiformschneiden von gewölbten Substraten aus sprödbrüchigem Material**
Process for free-form cutting bent substrates of brittle material
Procédé de découpe de formes libres de substrats cintrés composés de matériau fragile

(30) Priorität: 13.03.2004 DE 102004012402
(43) Veröffentlichungstag der Anmeldung: 14.09.2005
(73) Patentinhaber: Schott AG, 55122 Mainz (DE)
(72) Erfinder: Hoetzel, Bernd, 55286 Wörrstadt (DE)
(74) Vertreter: Mehler Achler

(56) Entgegenhaltungen:
- DE-C1- 10 001 292
- US-A- 5 609 284
- US-A1- 2002 046 997
- PATENT ABSTRACTS OF JAPAN Bd. 2003, Nr. 07, 3. Juli 2003 (2003-07-03) -& JP 2003 088976 A (HAMAMATSU PHOTONICS KK), 25. März 2003 (2003-03-25)

## Beschreibung

Die Erfindung bezieht sich auf ein Verfahren zum Durchtrennen von gewölbten Substraten aus sprödbrüchigem Material, bei dem ein Laserstrahl mit nachlaufendem Kühlspot entlang einer Trennlinie mit vorgegebener, in sich geschlossener Kontur, bewegt wird.

Vorzugsweise bestehen diese gewölbten Substrate aus Glas. Aus solchen gewölbten Glassubstraten können beispielsweise mit dem erfindungsgemäßen Verfahren herausgeschnitten werden: Brillengläser, Linsen, Lupen, Verkehrsspiegel, Automobilfront- und -heckscheiben sowie gewölbte Außen- und Rückspiegel für Automobile.

Im folgenden wird die Problematik des Freiformschneidens von Substraten aus sprödem Material anhand des Schneidens von Glas beschrieben. Sie ist bei Substraten aus einem anderen spröden Material (wie Keramik, Glaskeramik) in entsprechender Weise gegeben.

Das Schneiden von Glas ist eine weit verbreitete Technik. Klassische Trennverfahren für Glas basieren darauf, mittels eines Diamanten oder eines Schneidrädchens mechanisch zunächst eine Ritzspur im Glas zu generieren, um das Glas anschließend durch eine äußere mechanische Kraft entlang der so erzeugten Schwachstelle zu brechen (Ritzen-Brechen-Methode).

Moderne Trennverfahren zur Erzeugung von hochwertigen Glasteilen mit präzisen Abmessungen und hoher Oberflächen- bzw. Kantenqualität basieren auf dem Einbringen von thermisch generierten mechanischen Spannungen im Glas. Hierbei wird der Strahl einer Wärmequelle, der auf das Glas gerichtet ist, mit fester Geschwindigkeit relativ zu dem Glas bewegt und so eine derart hohe thermomechanische Spannung erzeugt, dass das Glas Risse bildet. Diese thermomechanische Spannung wird durch einen dem Wärmestrahl nachlaufenden Kühlspot noch verstärkt. Der notwendigen Eigenschaft der Wärmequelle, die thermische Energie lokal, d.h. mit einer Genauigkeit besser einem Millimeter, was den typischen Schnittgenauigkeiten entspricht, positionieren zu können, genügen Infrarotstrahler, spezielle Gasbrenner und insbesondere Laser. Laser haben sich wegen ihrer guten Fokussierbarkeit, guten Steuerbarkeit der Leistung sowie der Möglichkeit der Strahlformung und damit der Intensitätsverteilung auf Glas bewährt und durchgesetzt. Dabei wird in bestimmten Fällen das Glas durch den Laserstrahl mit Startritz zunächst geritzt, um es anschließend mechanisch zu brechen (Ritzen-Brechen-Methode).

Dieses Laserstrahl-Trennverfahren nach der Ritzen-Brechen-Methode, das durch eine lokale Erwärmung durch den fokussierten Laserstrahl in Verbindung mit einer Kühlung von außen eine thermomechanische Spannung bis über die Bruchfestigkeit des sprödbrüchigen Werkstoffes induziert, ist durch mehrere Schriften bekannt geworden, beispielsweise durch die EP 0 872 303 A2, die DE 693 04 194 T2 und die DE 43 05 107 C2.

Durch die DE 100 01 292 C1 ist ferner ein Laserstrahl-Trennverfahren bekannt geworden, bei dem in einem ersten Schritt die Prozessparameter wie Laserleistung, Laserstrahlprofil, Fokusablage des Laserstrahlprofils, Vorschubgeschwindigkeit und Kühlung, so eingestellt werden, dass das Werkstück entlang der Trennlinie bis zu einer bestimmten Tiefe (T) vom Laserstrahl geritzt wird, und bei dem in einem zweiten Schritt die Prozessparameter so verändert werden, dass der im ersten Schritt erzeugte Riss gezielt durch Aufbau einer weiteren entsprechenden thermomechanischen Spannung durch den Laserstrahl in die Tiefe des Werkstückes bis zu seiner vollständigen Durchtrennung getrieben wird.

Diese Zweistufigkeit der Durchtrennung mittels eines Laserstrahles, die ein mechanisches Brechen einer geritzten Glasplatte vermeidet, eignet sich im besonderen Maße für Schnitte entlang einer geschlossenen, beliebig vorgegebenen Kontur. Derartige Schnitte nennt man auch Freiformschnitte oder Konturschnitte. Sie sind beispielsweise notwendig beim Schneiden von Kraftfahrzeug-Verglasungen für Scheiben und Rückspiegel, beim Einbringen größerer Bohrungen in flachen Glasscheiben, sowie bei der Herstellung von Rundscheiben mit konzentrischem Innenloch, wie sie beispielsweise bei der Herstellung von Glassubstraten für optische oder magnetische Datenspeicher benutzt werden.

Diese Freiformschnitte mit in sich geschlossener Kontur bedürfen einer besonderen Verfahrensführung, die durch das vorgenannte zweistufige Laserstrahl-Trennverfahren gewährleistet ist, weil Absplitterungen an den Schnittkanten sowie ein Konturenversatz am Anfang und Ende des Schnittes, die bei der Ritzen-Brechen-Methode auftreten können, vermieden werden.

Eine besondere Herausforderung stellt das Laserstrahl-Freiformschneiden von gewölbten Werkstücken bzw. Substraten dar, weil die Normale im Bereich der Trennlinie gegenüber der mittigen (zentrischen) Normalen des herauszuschneidenden Produktes geneigt ist. Gewölbte Substrate wurden daher in der Praxis bislang nach der Ritzen-Brechen-Methode geschnitten, mit den geschilderten Nachteilen (zusätzliche Nacharbeitschritte, insbesondere wie Schleif- und Polierarbeiten wegen Absplitterungen und Konturenversatz).

Der Erfindung liegt die Aufgabe zugrunde, das eingangs bezeichnete Laserstrahl-Trennverfahren für gewölbte Substrate so zu führen, dass die daraus abzutrennenden Werkstücke (Produkte) splitterfrei und ohne Konturenversatz mit relativ geringem Aufwand in kurzen Taktzeiten erhältlich sind.

Die Lösung dieser Aufgabe gelingt bei einem Verfahren zum Durchtrennen von gewölbten Substraten aus sprödbrüchigem Material, insbesondere von Automobil-Front- oder Heckscheiben, bei dem ein Laserstrahl mit nachlaufendem Kühlspot entlang einer Trennlinie mit vorgegebener, in sich geschlossener Kontur, bewegt wird, mit den Schritten:
- Bereitstellen des gewölbten Substrates auf einer Unterlage ,
- Richten des Laserstrahles auf die Trennlinie bei vertikaler Strahlausrichtung in Bezug auf die Unterlage,
- zweistufiges Bewegen des Laserstrahles mit nachlaufendem Kühlspot entlang der Trennlinie in der Weise, dass in einem ersten Schritt die Prozessparameter wie Laserleistung, Laserstrahlprofil, Fokusablage des Laserstrahlprofils, Vorschubgeschwindigkeit und Kühlung, so eingestellt werden, dass das gewölbte Substrat entlang der Trennlinie bis zu einer bestimmten Tiefe geritzt wird, und dass in einem zweiten Schritt die Prozessparameter so verändert werden,
   dass der im ersten Schritt erzeugte Riss gezielt durch Aufbau einer weiteren entsprechenden thermomechanischen Spannung in die Tiefe des Substrates entlang der Substrat-Normalen im Auftreffpunkt des Laserstrahles auf die gewölbte Substratoberfläche bis zu seiner vollständigen Durchtrennung getrieben wird,
- Herauslösen des durchtrennten Werkstückes.

Überraschenderweise kann mit den an sich bekannten zweistufigen Laserstrahl-Trennverfahren auch ein gewölbtes Werkstück frei von Absplitterungen und ohne Konturenversatz geschnitten werden, obwohl der Laserstrahl nicht senkrecht auf der Trennlinie steht, d.h. der Energieeintrag nicht fluchtend mit der Dicke des Substrates erfolgt. Es hat sich gezeigt, dass die üblicherweise bei den Laserstrahl-Trennverfahren verwendete Laserstrahl-Optik eine so große Brennweite (300 - 400 mm), d.h. eine so lange Regelungsstrecke hat, dass der Laser nicht über die Wölbung mitgeführt zu werden braucht. Es ist daher mit großem Vorteil nicht nötig, den Laserkopf zu kippen, der Riss entsteht überraschenderweise dennoch senkrecht zur Werkstückfläche.

Es ist verständlich, dass der Radius der Wölbung nicht beliebig klein sein kann. Bei starker Wölbung müsste die Z-Achse variiert werden, aber ein Kippen wäre dennoch nicht nötig. Der Wölbungsradius eines gewölbten Autospiegels beträgt beispielsweise 2 m. Glasscheiben mit einer derartigen Wölbung lassen sich problemlos mit dem erfindungsgemäßen Verfahren schneiden. Der Wölbungsradius liegt vorzugsweise im Bereich von 100 mm bis 20.000 m.

Vorzugsweise wird das zweistufige Laserstrahl-Trennverfahren in der Weise durchgeführt, dass beim zweiten Trennschritt die eingestellte Fokuslage bestehen bleibt, jedoch die durch den Scanner eingestellte Laserstrahl-Profillänge erhöht, vorzugsweise um ca. 50 % verlängert wird. Konstant bleiben auch die Laserleistung und die Vorschubbewegung.

Vorzugsweise entstammt dabei der Laserstrahl aus einem CO₂-Laser, dessen Wellenlänge dem spektraken Absorptionsmaximum des zu schneidenden Glases entspricht. Dieser CO₂-Laser emittiert Licht im fernen infraroten Bereich bei einer Wellenlänge von 10,6 µm. Diese Wärmestrahlung zeigt erhebliche Besonderheiten bei der Wirkung auf Materie. So wird sie von den meisten, im sichtbaren Licht transparenten Materialien stark absorbiert. Der Umstand der starken Absorption in Glas wird verwendet, um Glas zu schneiden. Bei einem Absorptionskoeffizienten von 10³ cm⁻¹ wird 95 % der Leistung in einer 30 µm dicken Schicht absorbiert, d.h. die Laserstrahlung wird nur in der Glasoberfläche absorbiert. Erst über die Wärmeleitung wird die gesamte Glasdicke erwärmt. Verlängert man daher bei gleichem Vorschub das Laserstrahlprofil, ist es möglich, auch bei gewölbten Glas-Werkstücken den im ersten Schritt erzielten Laser-Ritz über die gesamte Glasdicke zu "treiben".

Vorzugsweise ist das gewölbte Substrat, mit der konvexen Seite dem Laser zugewandt, auf einer flachen Unterlage bereitgestellt (aufgespannt). Die geschnittenen Teile fallen dann bei ihrer Freilegung von selbst aufgrund der Schwerkraft nach unten und können so leicht von der Unterlage entfernt werden.

Für das Freilegen, d.h. das Herauslösen der geschnittenen Teile, sind verschiedene Verfahren denkbar.

So können beispielsweise Entlastungsschnitte bis zur Schneidkante angebracht werden. Diese Entlastungsschnitte können beispielsweise durch Hartmetallrädchen, einen Schneiddiamanten oder Laserriss angebracht werden.

Alternativ zum Entlastungsschnitt ist auch ein thermisches Öffnen der gebrochenen Kontur möglich. Ein Aufheizen des äußeren Randbereiches auf z.B. 80° C, bzw. ein Abkühlen der inneren Kontur ermöglicht ebenfalls das Entnehmen der gebrochenen Kontur. Dieses Prinzip wird beispielsweise in der vorgenannten DE 100 01 292 C1, aber auch in der DE 201 07 204.1 U beschrieben.

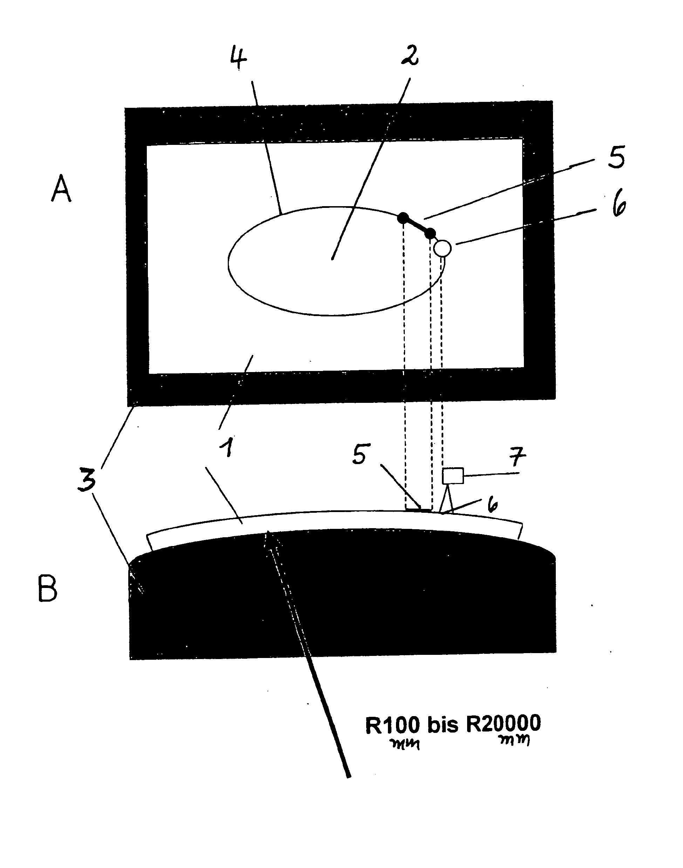

Anhand eines in der Patentzeichnung in einer einzigen Figur mit zwei Figurenteilen A, B dargestellten Ausführungsbeispieles wird die Erfindung näher erläutert. Der Figurenteil A zeigt dabei eine Draufsicht auf ein gewölbtes Glassubstrat, an dem ein ovales Produkt herausgeschnitten werden soll, und der Figurenteil B zeigt die zugehörige Seitenansicht.

Das gewölbte Glassubstrat 1, aus dem ein symbolisch durch eine Ellipse dargestelltes, gewölbtes Glasprodukt 2 herausgetrennt werden soll, liegt auf einer Unterlage 3 auf. In der Zeichnung ist die Unterlage an der Auflagefläche ebenfalls gewölbt ausgebildet; sie kann jedoch auch flach ausgebildet sein.

Als herauszutrennende Glasprodukte kommen insbesondere die eingangs (Seite 1, 2. Absatz) dargelegten Produkte, insbesondere Automobilfront- und Heckscheiben, in Frage.

Zum Durchtrennen wird ein Laserstrahl verwendet, der auf der Trennlinie 4 einen Brennfleck 5 bildet. Mit ihm gekoppelt ist ein nachlaufender Kühlspot 6, der von einer Kühleinrichtung 7 erzeugt wird.

Im dargestellten Beispiel hat der Brennfleck 5 eine linienförmige Struktur mit Intensitätsmaxima an den Enden. Ein Brennfleck mit dieser Konfiguration und Intensitätsverteilung wird in der DE 199 59 921 C1 beschrieben, deren Inhalt durch Bezugnahme mit zum Offenbarungsinhalt der vorliegenden Anmeldung gemacht wird. Die Länge dieses Brennfleckes wird dabei abhängig von der Krümmung der Trennlinie selbsttätig eingestellt, so dass eine optimale Schneidleistung erzielbar ist. Aber auch andere Formen des Brennfleckes (V- oder U-förmig etc.) sind denkbar.

Die Erzeugung des Laserstrahles, die Strahlprofilbildung sowie die Bewegung des Brennfleckes 5 mit dem nachlaufenden Kühlspot 6 entlang der Trennlinie 4 sind an sich bekannt und brauchen daher hier nicht näher dargestellt zu werden.

Der Laserstrahl, d.h. der Brennfleck 5 mit dem Kühlspot 6, wird dabei, wie bereits beschrieben, zweistufig, d.h. in zwei Schritten entlang der Trennlinie 4 bewegt, um ein vollständiges Durchtrennen ohne nachfolgendes mechanisches Brechen zu erzielen, was sich gerade beim Durchtrennen von gewölbten Substraten als wesentlich erwiesen hat.

Der Wölbungsradius R des Substrates kann dabei in einem sehr breiten Bereich variieren. Dieser liegt vorzugsweise zwischen 100 mm und 20.000 mm.

## Patentansprüche

1. Verfahren zum Durchtrennen von gewölbten Substraten aus sprödbrüchigem Material, insbesondere von Automobil-Front- oder Heckscheiben, bei dem ein Laserstrahl mit nachlaufendem Kühlspot entlang einer Trennlinie mit vorgegebener, in sich geschlossener Kontur, bewegt wird, mit den Schritten:
- Bereitstellen des gewölbten Substrates (1) auf einer Unterlage (3),
- Richten des Laserstrahles (5) auf die Trennlinie (4) bei vertikaler Strahlausrichtung in Bezug auf die Unterlage,
- zweistufiges Bewegen des Laserstrahles (5) mit nachlaufendem Kühlspot (6) entlang der Trennlinie (4) in der Weise, dass in einem ersten Schritt die Prozessparameter wie Laserleistung, Laserstrahlprofil, Fokusablage des Laserstrahlprofils, Vorschubgeschwindigkeit und Kühlung so eingestellt werden, dass das gewölbte Substrat entlang der Trennlinie (4) bis zu einer bestimmten Tiefe geritzt wird, und dass in einem zweiten Schritt die Prozessparameter so verändert werden, dass der im ersten Schritt erzeugte Riss gezielt durch Aufbau einer weiteren entsprechenden thermomechanischen Spannung in die Tiefe des Substrates (1) entlang der Substrat-Normalen im Auftreffpunkt des Laserstrahles auf die gewölbte Substratoberfläche bis zu seiner vollständigen Durchtrennung getrieben wird,
- Herauslösen des durchtrennten Werkstückes (2).

2. Verfahren nach Anspruch 1, bei dem im zweiten Schritt bei ansonsten gleichen Prozessparametern die Laserstrahlprofil-Länge erhöht wird.

3. Verfahren nach Anspruch 2, bei dem die Erhöhung der Laserstrahlprofil-Länge ca. 50 % beträgt.

4. Verfahren nach einem der Ansprüche 1 bis 3, bei dem als Laser ein CO₂-Laser eingesetzt wird.

5. Verfahren nach einem der Ansprüche 1 bis 4, dem das gewölbte Substrat, mit der konvexen Seite dem Laser zugewandt, auf einer flachen Unterlage bereitgestellt wird.

6. Verfahren nach einem der Ansprüche 1 bis 5, bei dem zum Herauslösen des durchtrennten Werkstückes unter Aufbringen einer mechanischen Kraft eine Temperaturdifferenz zwischen den Bereichen diesseits und jenseits der Trennlinie erzeugt wird.

7. Verfahren nach Anspruch 7, bei dem der Bereich jenseits der Trennlinie auf ca. 80° C erwärmt wird.

## Claims

1. Process for cutting through curved substrates made of brittle material, in particular of front or rear automobile windscreens, in which a laser beam with a following cooling spot is moved along a cutting line with a predetermined, continuous contour, comprising the steps of:
- providing the curved substrate (1) on a base (3),
- directing the laser beam (5) at the cutting line (4) with a vertical alignment of the beam with respect to the base,
- moving the laser beam (5) with the following cooling spot (6) along the cutting line (4) in two stages such that, in a first step, the process parameters such as the laser power, laser beam profile, focal deviation of the laser beam profile, rate of advancement and cooling, are set such that the curved substrate is scored to a specific depth along the cutting line (4), and in that, in a second step, the process parameters are changed such that the score produced in the first step is specifically driven into the depth of the substrate (1) along the normal to the substrate at the point of impingement of the laser beam on the curved substrate surface by building up a further corresponding thermomechanical stress until the substrate is cut through completely,
- removing the cut-through workpiece (2).

2. Process according to Claim 1, in which, in the second step, the length of the laser beam profile is increased while the process parameters are otherwise the same.

3. Process according to Claim 2, in which the increase in the length of the laser beam profile is about 50%.

4. Process according to one of Claims 1 to 3, in which a CO₂ laser is used as the laser.

5. Process according to one of Claims 1 to 4, in which the curved substrate is provided on a flat base, with the convex side facing the laser.

6. Process according to one of Claims 1 to 5, in which, to remove the cut-through workpiece while applying a mechanical force, a temperature difference is produced between the regions on the near side and the far side of the cutting line.

7. Process according to Claim 7, in which the region on the far side of the cutting line is heated to about 80°C.

## Revendications

1. Procédé de découpe de substrats bombés en matériau cassant, en particulier de vitres avant ou arrière d'automobile, dans lequel un faisceau laser suivi d'un point de refroidissement est déplacé le long d'une ligne de découpe qui présente un contour prédéterminé intrinsèquement fermé, le procédé présentant les étapes qui consistent à :
- préparer le substrat bombé (1) sur un soubassement (3),
- orienter le faisceau laser (5) sur la ligne de découpe (4) en alignant le faisceau verticalement par rapport au soubassement,
- déplacer en deux étapes le faisceau laser (5) suivi d'un point de refroidissement (6) le long de la ligne de découpe (4) de telle sorte que dans la première étape, les paramètres de l'opération, par exemple la puissance laser, le profil du faisceau laser, la position du foyer du profil du faisceau laser, la vitesse d'avancement et le refroidissement soient réglés de telle sorte que le substrat bombé soit fendu jusqu'à une profondeur définie le long de la ligne de découpe (4) et que dans une deuxième étape, les paramètres de l'opération soient modifiés de telle sorte que la fente formée au cours de la première étape soit prolongée jusqu'à découpe complète par établissement d'une contrainte thermomécanique supplémentaire appropriée dans la profondeur du substrat (1) le long de la normale au substrat et au point d'incidence du faisceau laser sur la surface bombée du substrat et
- détachement de la pièce (2) découpée.

2. Procédé selon la revendication 1, dans lequel, au cours de la deuxième étape, la longueur du profil du faisceau laser est augmentée, les autres paramètres de l'opération restant constants.

3. Procédé selon la revendication 2, dans lequel l'augmentation de la longueur du profil du faisceau laser est d'environ 50 %.

4. Procédé selon l'une des revendications 1 à 3, dans lequel le laser utilisé est un laser au CO₂.

5. Procédé selon l'une des revendications 1 à 4, dans lequel le substrat bombé est préparé sur un soubassement plat avec son côté convexe tourné vers le laser.

6. Procédé selon l'une des revendications 1 à 5, dans lequel pour détacher la pièce découpée, on établit une différence de température entre les parties situées de part et d'autre de la ligne de découpe tout en appliquant une force mécanique.

7. Procédé selon la revendication 7, dans lequel les parties situées de part et d'autre de la ligne de découpe sont chauffées à environ 80°C.
